# EUROPÄISCHE PATENTSCHRIFT

(11) **EP 0 785 861 B1**
(45) Veröffentlichungstag und Bekanntmachung des Hinweises auf die Patenterteilung: **20.05.1998**
(21) Anmeldenummer: 95932738.8
(22) Anmeldetag: 12.09.1995
(51) Int. Cl.: B30B 15/16

(54) **HYDRAULISCHES ANTRIEBSSYSTEM FÜR EINE PRESSE**
HYDRAULIC PRESS DRIVE
SYSTEME D'ENTRAINEMENT HYDRAULIQUE POUR UNE PRESSE

(30) Priorität: 13.10.1994 DE 4436666
(43) Veröffentlichungstag der Anmeldung: 30.07.1997
(73) Patentinhaber: Mannesmann Rexroth GmbH, 97816 Lohr/Main (DE)
(72) Erfinder: SCHMIDT, Stefan, D-97816 Lohr (DE)
(74) Vertreter: Patentanwälte Hauck, Graalfs, Wehnert, Döring, Siemons
(86) Internationale Anmeldenummer: EP9503604
(87) Internationale Veröffentlichungsnummer: WO9611796

(56) Entgegenhaltungen:
- EP-A- 0 116 024
- EP-A- 0 311 779
- EP-A- 0 615 837
- EP-A- 0 641 644
- GB-A- 2 006 654

## Beschreibung

Hydraulisches Antriebssystem für eine Presse gemäß dem Oberbegriff des Patentanspruches 1.

Zur Bildung des Oberbegriffes des Patentanspruches 1 wurde von einem hydraulischen Antriebssystem ausgegangen, wie es aus DE 32 02 015 C2 der Anmelderin bekannt ist. Es handelt sich dabei um ein sogenanntes sekundärgeregeltes Antriebssystem, bei dem in einem Leitungsnetz ein eingeprägter Druck erzeugt wird und an das Leitungsnetz ein sogenannter hydraulischer Transformator angeschlossen ist, der aus zwei mechanisch miteinander gekuppelten hydrostatischen Maschinen mit verstellbarem Schluck- bzw. Fördervolumen besteht. Dabei ist die zweite hydrostatische Maschine hydraulisch an einen Arbeitszylinder angeschlossen. Auf diese Weise läßt sich ein sekundärgeregeltes Antriebssystem auch zum Antrieb eines Arbeitszylinders verwenden, und es ergibt sich eine erhebliche Energieeinsparung, da die an die Druckleitung mit eingeprägtem Druck angeschlossene hydrostatische Arbeitsmaschine des hydraulischen Transformators nur diejenige Antriebsleistung aus dem Versorgungsnetz entnimmt, die für den Energiebedarf des Verbrauchers erforderlich ist, während andererseits die bei Pumpen- bzw. Generatorbetrieb der Arbeitsmaschine anfallende hydraulische Energie in das Drucknetz zurückgespeist wird oder darin gespeichert wird.

Allgemein liegt der Erfindung die Aufgabe zugrunde, den Hauptantrieb, also Pressenzylinder einer Presse mit einem sekundärgeregelten Antriebssystem zu versehen. Es ist für Pressenzylinder bekannt, beide Zylinderräume mit einem bestimmten Vorspanndruck des Drucköls vorzuspannen, wobei der Druck von einer besonderen Vorspannpumpe erzeugt wird. Handelt es sich bei dem Pressenzylinder um einen Gleichgangzylinder, also einen Zylinder mit gleichen Kolbenringflächen, so ergeben sich in beiden Zylinderräumen ohne weiteres gleich hohe Vorspanndrücke. Handelt es sich dagegen um einen Differentialzylinder, so lassen sich gleiche Vorspanndrücke im kolbenseitigen Zylinderraum sowie im kolbenstangenseitigen Zylinderraum dadurch erzeugen, daß mindestens ein Nebenzylinder vorgesehen wird, und die Ringfläche aller Zylinder annähernd gleich groß der Kolbenfläche des Pressenzylinders gemacht wird. Dieses Prinzip ist im Zusammenhang mit anderen Schaltungsarten bekannt.

Die spezielle der Erfindung zugrundeliegende Aufgabe besteht darin, das Antriebssystem der eingangs geschilderten Art so auszubilden, daß der Vorspanndruck in einfacher Weise erzeugt werden kann und die beim Betrieb einer Presse bedingten Verluste erheblich verringert werden und außerdem die Steuerung der Presse vereinfacht wird.

Erfindungsgemäß ergibt sich die Lösung dieser Aufgabe mit den Merkmalen des Patentanspruches 1. Weiterbildungen der Erfindung sind in den Unteransprüchen gekennzeichnet.

Erfindungsgemäß wird der Pressenzylinder an die Druckleitung der Primärmaschine angeschlossen und in der Druckleitung herrscht als eingeprägter Druck der erforderliche Vorspanndruck. Erfindungsgemäß erfolgt also das Vorspannen des Pressenzylinders verlustfrei aus dem vorhandenen Konstantdrucksystem bzw. der Druckleitung mit dem eingeprägten Druck. Es gerät also eine besondere Vorspannpumpe in Wegfall. Ebensowenig erfolgt die Vorspannung durch Reduzieren eines höheren Druckes, beispielsweise eines maximalen Betriebsdruckes oder in einem besonderen Zyklusschritt zum Vorspannen, wie es in bekannten Anlagen der Fall ist. Ebenso werden für einen Druckausgleich der Presse erforderliche Nebenzylinder mit dem Konstantdrucksystem verbunden und damit auch in den betreffenden Zylinderräumen der Vorspanndruck eingesteuert. Die Nebenzylinder sind parallel zum Pressenzylinder vorgesehen und es ist die Summe aller Ringflächen der Zylinder etwa gleich oder etwas größer als die Kolbenfläche im kolbenseitigen Raum des Pressenzylinders.

Die Druckleitung mit dem eingeprägten Druck ist mit dem Pressenzylinder über ein Rückschlagventil verbunden, so daß eine etwaige Leckage im Pressenantrieb und/oder im Spülbetrieb zum Tank abgeführtes Betriebsmittel jederzeit nachgespeist wird. Zusätzlich kann in der Verbindung zwischen der Druckleitung und dem Pressenzylinder ein Druckregelventil vorgesehen sein, das allerdings nur dann den eingeprägten Druck auf den nötigen Vorspanndruck regelt, wenn der Vorspanndruck geringer sein soll als der für den Motorbetrieb der ersten hydrostatischen Maschine des Transformators notwendigen Druck. In der Regel beträgt aber der Vorspanndruck und damit der Ahtriebsdruck für die erste Maschine des Transformators etwa zwei Drittel des maximalen Preßdruckes. So ist die zweite hydrostatische Maschine des hydraulischen Transformators, also die Antriebspumpe für die Verstellung des Preßkolbens so ausgelegt, daß sie die maximale Fördermenge mit etwa zwei Drittel des Maximaldruckes liefert, soll also die Antriebspumpe den Maximaldruck im Pressenhub erreichen, so muß sie auf zwei Drittel des maximalen Fördervolumens zurückschwenken. Hieraus ergeben sich für den Pressenzyklus keine Einschränkungen.

Ein besonderer Vorteil des Antriebssystems liegt auch darin, daß der gesamte Pressenzyklus, nämlich Zustellung im Eilgang, Pressen, Dekomprimieren, Zurückfahren im Eilgang und Spülen des heißen Betriebsmittels mit nur einer einzigen hydrostatischen Maschine als Stellglied gesteuert wird. Für die notwendigen Umschaltungen sind nur wenige Ventile vorgesehen, vorzugsweise kommen 2/2-Wege-Einbauventile zum Einsatz. Im System sind mit Ausnahme der Pilotventile der Verstellpumpe keine Proportionalventile vorgesehen. Der Übergang vom Eilgang zum Pressen erfolgt ohne aktive Umschaltung über die Rückschlagfunktion der 2/2-Wege-Einbauventile am Pressenzylinder, wie dies noch erläutert wird.

Ferner sind der Pressenzylinder und die Nebenzylinder volumenmäßig so ausgelegt, daß der gesamte Pressenzyklus im geschlossenen Kreis gefahren werden kann, d.h. ohne daß es erforderlich ist, dem Kreislaufsystem innewohnende Energie zu vernichten. So sind (Anspruch 5) die Kolbenflächen der Zylinder im Verhältnis zur Kolbenstirnseite des Preßzylinders so ausgelegt, daß Eilgang und Preßhub über die zweite Maschine des hydraulischen Transformators im geschlossenen Kreislauf des Arbeitsmittels gefahren werden, volumetrische Verluste der Pumpen nicht berücksichtigt. Diese Verluste werden aber automatisch über die Vorspannung dh. Ventil 23 ausgeglichen, ohne daß prozeßbedingt Arbeitsmittel aus dem Drucknetz nachgespeist wird oder Arbeitsmittel zum Tank abgeführt wird. Erfindungsgemäß ist also das System so ausgelegt, daß die beim Stand der Technik vorhandenen Drossel- bzw. Druckölverluste vermieden sind. Beim Dekomprimieren und Spülen wird die freiwerdende Energie zurückgewonnen und in das Konstantdrucknetz zurückgespeist, das hierzu mit einem Speicher versehen ist. Erfindungsgemäß ergeben sich hiermit hohe Hubzahlen der Presse bei kleinen bewegten Ölvolumen im Eilgang und beim Pressen sowie eine geringe Verlustleistung.

Trotz der Tatsache, daß für den Pressenantrieb insgesamt drei hydrostatische Maschinen erforderlich sind, sich also infolge der mehrfachen Energiewandlungen ein schlechterer Wirkungsgrad einstellt, ergibt sich jedoch für die Presse insgesamt eine erhebliche Verminderung der Verlustleistung um bis zu 65 Prozent gegenüber konventionellen Antrieben. Als Antriebsleistung muß lediglich eine mittlere Leistung installiert werden. Die Antriebsleistung läßt sich auf bis zu 15 Prozent der Antriebsleistung konventioneller Antriebe reduzieren. Somit ergibt sich für den Pressenzyklus ein idealer Wirkungsgrad.

Das erfindungsgemäße hydraulische Antriebssystem läßt sich sowohl für Differentialzylinder wie auch für Gleichgangzylinder als Pressenzylinder anwenden. Im letzteren Fall müssen allerdings zwei hydraulische Transformatoren vorgesehen sein, nämlich ein Transformator für den Eilgang des Pressenzylinders und ein zweiter hydraulischer Transformator für den Pressenhub. Ansonsten ist die Beschaltung des Antriebssystems mit dem Vorspanndruck usw. in gleicher Weise ausgeführt wie bei dem Antriebssystem mit einem Differentialzylinder.

Zwei Ausführungsbeispiele der Erfindung sind nachstehend anhand der Zeichnungen näher erläutert. Es zeigt:
- Fig. 1: eine schematische Darstellung des hydraulischen Antriebssystems für einen Differentialzylinder als Pressenzylinder und
- Fig. 2: die Ventilstellungen und die Einstellung des hydraulischen Transformators für einen Preßvorgang mit Dekomprimieren bei dem Antriebssystem nach Fig. 1;
- Fig. 3: eine schematische Darstellung eines hydraulischen Antriebssystems für einen Gleichgangzylinder als Pressenzylinder;
- Fig. 4: die Ventilstellungen und die Einstellung des hydraulischen Transformators für einen Preßvorgang mit Dekomprimieren bei dem Antriebssystem nach Fig. 3.

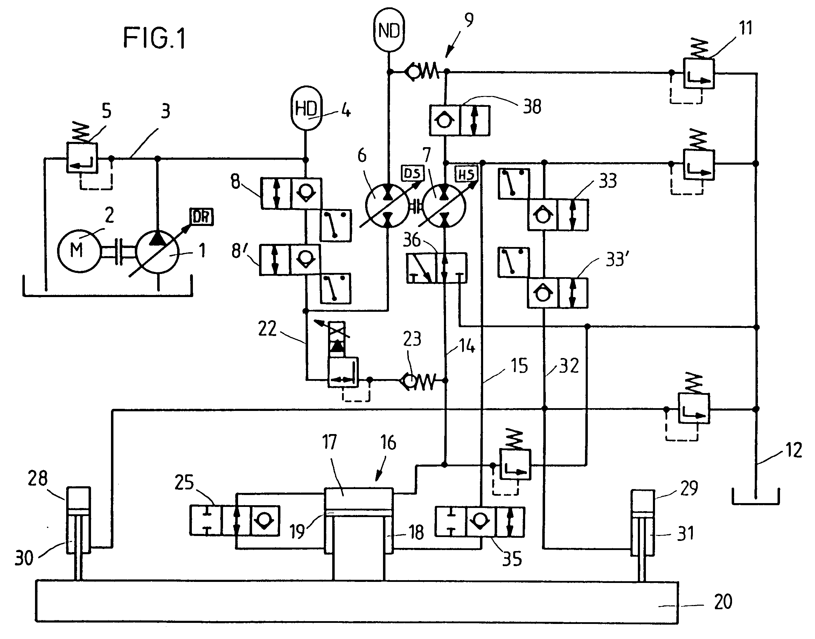

In Fig. 1 speist eine hydrostatische Maschine 1 als Verstellpumpe, die von einem Motor 2 angetrieben ist, Arbeitsmittel in eine Druckleitung 3, mit einem hydraulischen Speicher 4. In der Druckleitung 3 wird ein eingeprägter Druck bzw. ein Konstantdruck aufrechterhalten. Das Ventil 5 dient zur Druckabsicherung.

Ein hydraulischer Transformator besteht aus einer ersten hydrostatischen Maschine 6 und einer mit ihr mechanisch gekuppelten zweiten hydrostatischen Maschine 7. Beide Maschinen sind im Schluck- bzw. Fördervolumen verstellbar, das zugehörige Verstellsystem ist mit DS bzw. HS angedeutet. Beide Maschinen können als Pumpen bzw. als Motor arbeiten. Arbeitet die erste Maschine 6 als Motor, so wird sie bei freigeschalteten Sicherheitsventilen 8 und 8' vom Arbeitsmittel im Konstantdrucknetz 3 angetrieben. Das die Maschine 6 verlassende Arbeitsmittel strömt in ein Niederdrucksystem 9, in dem ein Speicher 10 vorgesehen sein kann und in dem von einem Ventil 11 ein bestimmter verhältnismäßig geringer Druck, der etwas über dem Druck im Reservoir 12 liegt, einstellbar ist. Die Maschine 6 treibt im Motorbetrieb die zweite hydrostatische Maschine 7 an, deren Anschlüsse über Leitungen 14 und 15 mit einem Pressenzylinder 16 verbunden sind. Dabei führt die Leitung 14 in den kolbenseitigen Zylinderraum 17 und die Leitung 15 in den kolbenstangenseitigen Zylinderraum 18. Der Kolben 19 des Pressenzylinders 16 besitzt also eine dem Raum 17 zugekehrte Kolbenfläche und dem Ringraum 18 zugeordnete Ringfläche. Der Kolben ist mit einer Presse 20 verbunden.

Die Verstellung des Kolbens 19 im Pressenzylinder 16 erfolgt also durch das bei entsprechender Drehrichtung der zweiten Maschine 7 geförderte Arbeitsmittel. Die Drehrichtung läßt sich von der über Null verschwenkbaren Verstellung der Maschine 7 wählen. Der Ausschwenkwinkel bestimmt das geförderte Volumen und damit die Geschwindigkeit des Kolbens 19. Die Betriebsweise des hydraulischen Transformators 6, 7 zum Antrieb eines Arbeitszylinders ist auch in der genannten DE 32 02 015 C2 dargestellt.

Um ein verlustfreies Verschieben des Pressenkolbens im geschlossenen Kreislauf im Eilgang und Pressen zu erzielen, sind die zwei einfach wirkende Nebenzylinder 28 und 29 vorgesehen, deren Kolben ebenfalls mit der Presse 20 verbunden sind. Die Kolbenringflächen der Nebenzylinder 28 und 29 zusammen mit der Kolbenringfläche des Kolbens 19 sind etwa gleich groß wie die Kolbenfläche des Pressenzylinders, also die dem Raum 17 zugekehrte Fläche des Kolbens 19. Damit läßt sich erreichen, daß beim Absenken der Presse das aus den kolbenstangenseitigen Zylinderräumen der Zylinder 16, 18 und 29 verdrängte Arbeitsmittel den sich vergrößernden kolbenseitigen Zylinderraum 17 füllen kann, ohne daß zusätzliches Arbeitsmittel nachgespeist werden muß. Vorzugsweise ist ein geringer Flächenüberschuß der Kolbenringseiten vorgesehen, um Leckage der Antriebsmaschine 7 zum kompensieren und damit eine Verringerung der Vorspannung im Eilgang zu vermeiden.

Die kolbenstangenseitigen Zylinderräume 30, 31 der Nebenzylinder 28 und 29 sind über eine Leitung 32 miteinander verbunden, die über den Vorschriften zufolge erforderliche Sicherheitsventile 33 und 33' niederdruckseitig der Maschine 7 mit der Leitung 15 verbunden ist, die über ein Ventil 35 an den kolbenstangenseitigen Zylinderraum 18 des Pressenzylinders 16 angeschlossen ist. Die kolbenseitigen Zylinderräume sind an den Tank angeschlossen.

Die Kolben 19, 28 und 29 der Presse werden beidseitig vorgespannt, nämlich mit einem Vorspanndruck, der in beiden Zylinderräumen 17, 18, 30 und 31 eingesteuert wird. Hierzu ist erfindungsgemäß eine Verbindungsleitung 22 vorgesehen, in der ein Rückschlagventil 23 sitzt, das zur Leitung 14 hin öffnet. Die beiden Zylinderräume 17 und 18 sind über ein Ventil 25 miteinander verbunden. Dieses Ventil wird auch als Kurzschlußventil 25 bezeichnet. In der in den Zeichnungen dargestellten Kurzschlußstellung sind über das Ventil 25 die beiden Zylinderräume 17 und 18 miteinander verbunden, d.h. der Konstantdruck in der Druckleitung 3 wirkt als Vorspanndruck für den Pressenzylinder 16 in beiden Zylinderräumen 17, 18. Ferner sind die Zylinderräume 30 und 31 der Nebenzylinder 28 und 29 über die Leitung 32, die beiden aus Sicherheitsgründen erforderlichen Ventile 33, 33', die Leitung 15 und das Wegeventil 35 an den Zylinderraum 18 des Pressenzylinders 16 angeschlossen. Das im Niederdruckteil angeordnete Ventil 38 ist dabei geschlossen. Somit wird der Vorspanndruck erfindungsgemäß in einfacher Weise ohne Verluste in allen für den Druckausgleich erforderlichen Zylinderräumen 17, 18 und 30, 31 dadurch eingesteuert, daß die Druckleitung 3 über das Rückschlagventil 23 angezapft ist.

Die Betriebsweise ist folgende: Im Eilgang zur Zustellung der Presse 20 ist das Kurzschlußventil 25 in der dargestellten Schaltposition, in der es die beiden Zylinderräume 17 und 18 des Pressenzylinders 16 miteinander verbindet, so daß in beiden Räumen der Vorspanndruck aus der Konstantdruckleitung 3 eingesteuert wird. Das Wegeventil 35 ist ebenfalls in der dargestellten Lage und die Sicherheitsventile 33 und 33' sind freigeschaltet. Wird nun die von der Maschine 6 angetriebene, als Pumpe arbeitende zweite Maschine 7 ausgeschwenkt, so wird Arbeitsmittel aus den ringseitigen Zylinderräumen 30 und 31 über die Leitung 32 von der Pumpe 7 in die Leitung 14 und in den kolbenseitigen Zylinderraum 17 gefördert, so daß der Kolben 19 rasch abgesenkt wird. Gleichzeitig strömt Drucköl über das Kurzschlußventil 25 vom Ringraum 18 des Pressenzylinders 16 in den Kolbenraum 17. Es wird also bei eingesteuertem Vorspanndruck der Pressenkolben 19 allein mit dem Drucköl aus den kolbenringseitigen Zylinderräumen 30, 31 der Zylinder 28 und 29 verschoben. Die Maschine 7 kann aber auch als Motor wirkend generatorisch die Maschine 6 antreiben und damit Mittel aus dem Niederdruckkreis 9 in den Speicher 4 zurückfördern, also die Energie zurückgewinnen, wenn die Presse so schwer ist, daß sie im Eilgang nicht angetrieben werden muß, sondern vielmehr von den Kolben der Nebenzylinder 28 und 29 das Druckmittel aus den Zylinderräumen 30 und 31 herausgedrückt wird.

Beim Pressen wird die Maschine 7 von der Eilgangsgeschwindigkeit auf die Pressgeschwindigkeit verschwenkt, also abgebremst. Beim Auftreten einer Gegenkraft, so beim Aufsetzen der Presse, reduziert sich der Haltedruck in der Leitung 15 bzw. 32 und damit auch in den entsprechenden Zylinderräumen. Jetzt ist das Kurzschlußventil 25 geschlossen, und es stellt sich in den Zylinderräumen 17 und 18 eine Druckdifferenz ein. Das Kurzschlußventil 25 kann so ausgeführt sein, daß es beim Auftreten der Gegenkraft automatisch schließt. Jezt wird die Pumpe 7 ausgeschwenkt und fördert nun das aus allen kolbenringseitigen Zylinderräumen 18, 30 und 31 verdrängte Ölvolumen wiederum in den kolbenseitigen Zylinderraum 17. Dabei ist das Ventil 38 zur Niederdruckseite hin für gewöhnlich geschlossen, so daß die Druckerhöhung nicht aus dem Niederdrucknetz, sondern aus dem vergleichsweise hohen Druck in den kolbenringseitigen Zylinderräumen erfolgt. Nur wenn dieser Druck absinkt und die Gefahr besteht, daß die Pumpe 7 kavitiert, öffnet das Rückschlagventil 38 und Öl kann aus dem Niederdrucknetz nachgesaugt werden.

Zum Erreichen des Maximaldrucks wird die Pumpe 7 auf eine niedrigere Fördermenge eingeschwenkt. Dadurch muß die Antriebsmaschine 6 nicht auf Eckleistung ausgelegt sein. Der erreichbare Maximaldruck liegt somit beliebig höher als der Vorspanndruck.

Beim Ausführen des Pressenhubes hat sich das Arbeitsmittel im Zylinderraum 17 komprimiert. Zum Dekomprimieren dient wiederum die Maschine 7, die nunmehr von dem Arbeitsmittel hohen Druckes aus dem Zylinderraum 16 angetrieben wird und generatorisch die Maschine 6 antreibt. Die beim Dekomprimieren freiwerdende Energie wird also über den hydraulischen Transformator 6, 7 in das Drucknetz 3, 4 zurückgespeist. Dabei sind die Ventile 33, 33' in Rückschlagfunktion, das Kurzschlußventil 25 ist offen.

Da während der Antriebszyklen in der Regel kein zusätzliches Arbeitsmittel aus dem Konstantdrucknetz benötigt wird, erfährt das für den Eilgang und Pressenhub im Antriebssystem zirkulierende Arbeitsmittel eine beträchtliche Erwärmung. Somit ist ein Spülen des Kreislaufes vorgesehen.

Zum Spülen während des Stillstands der Presse wird ein in der Verbindungsleitung 14 liegendes Umschaltventil 36 geöffnet und damit der Auslaß der Pumpe zum Tank 12 geführt. Das ausströmende Arbeitsmittel wird vom Konstantdrucknetz 3 über das öffnende Rückschlagventil 23 nachgespeist, so daß insgesamt das erwärmte im Pressenzylinder 16, in der Leitung 15 und in der Maschine 7 vorhandene Arbeitsmittel abgeführt und durch frisches Arbeitsmittel ersetzt wird. Dabei wird die Maschine 7 von dem aus dem Preßzylinder 16 und dem zugehörigen Leitungssystem verdrängte Arbeitsmittel, das von der Leitung 15 her die Maschine 7 durchströmt, angetrieben, so daß auch beim Spülen das Druckgefälle zwischen dem Vorspanndruck und dem Tankdruck ausgenützt wird und die zurückgewonnene Energie von der nunmehr als Pumpe arbeitenden Maschine 6 in das Konstantdrucknetz 3 zurückgespeist wird. Beim Spülen sind die Nebenzylinder 28 und 29 über die Sicherheitsventile 33, 33' abgesperrt, so daß die Presse im Stillstand in einer bestimmten Lage gehalten wird.

Ein Spülen kann aber auch bei laufender Presse dadurch erfolgen, daß während des Dekomprimierens das die als Motor arbeitende und die Maschine 6 antreibende Maschine 7 verlassende Arbeitsmittel nicht in die kolbenringseitigen Zylinderräume 18, 30, 31 zurückgeführt wird, sondern vielmehr über ein Ventil 38 in das Niederdrucksystem 9. Das Nachspeisen erfolgt wiederum über das sich öffnende Rückschlagventil 23 aus dem Konstantdrucknetz 3, 4. Der Druckausgleich der Kammern benötigt in diesem Fall unter Umständen mehr Zeit, da das aus dem Zylinderraum 17 abfließende Öl nicht zur Druckerhöhung in den Kammern 18, 30, 31 verwendet wird. Jedenfalls ist aber ein Stillstand der Presse nicht erforderlich.

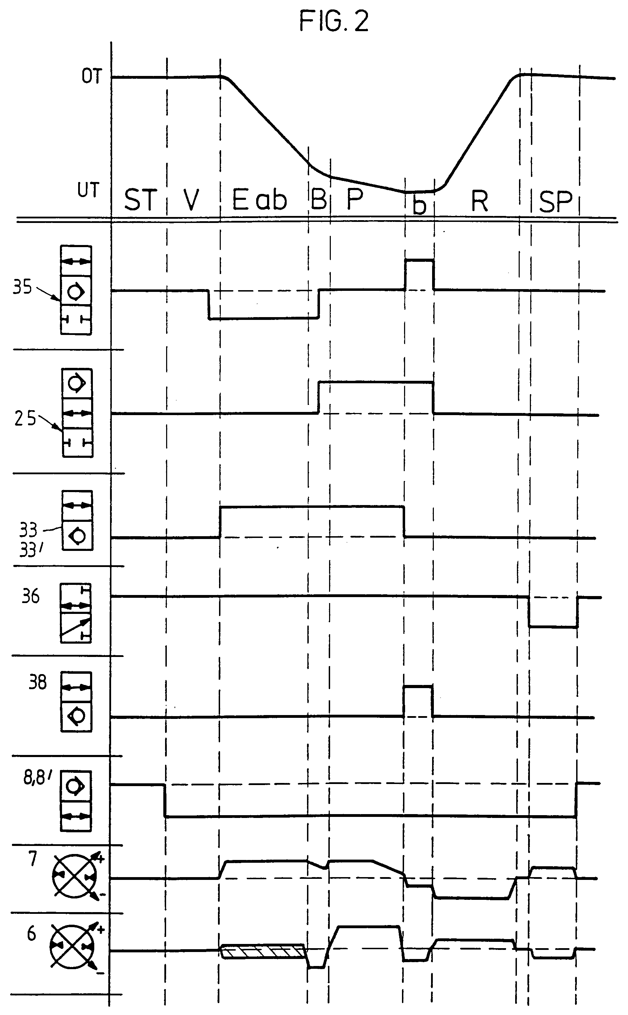

Fig. 2 zeigt die Ventilstellungen sowie die Einstellung der Maschinen des hydraulischen Transformators im Stillstand ST der Presse, beim Vorspannen V, Eilgang abwärts Eab, Bremsen B, Pressen P, Dekomprimieren D, Rückzug R der Presse und Spülen SP im Stillstand. Für die Maschinen 6 und 7 des hydraulischen Transformators ist angegeben, ob sie als Pumpe oder als Motor arbeiten und damit Energie für den Antrieb aus dem Konstantdrucknetz entnehmen oder Energie in das Konstantdrucknetz zurückspeisen.

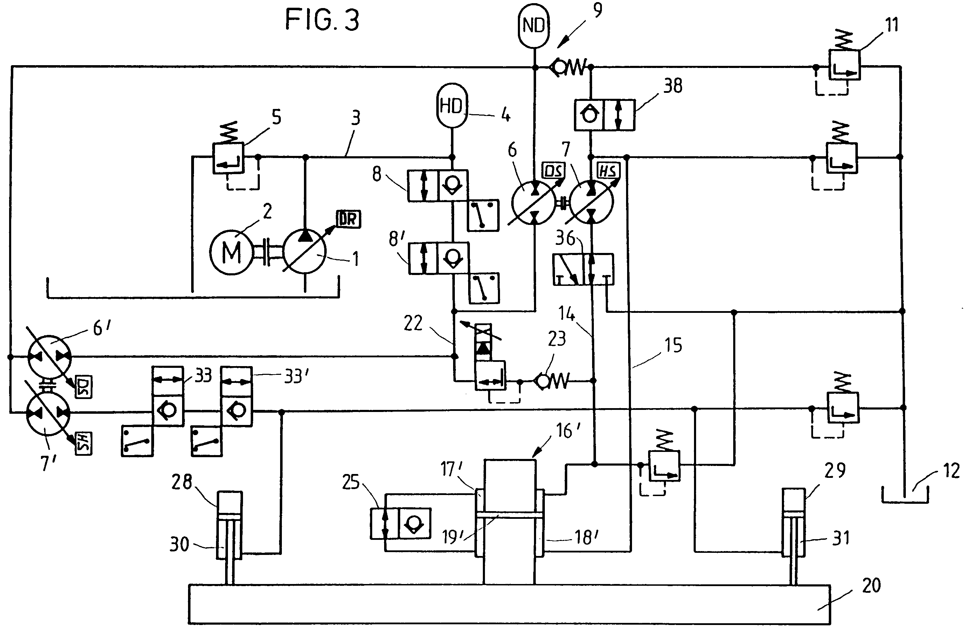

Fig. 3 zeigt ein Antriebssystem für einen Pressenzylinder 16' als Gleichgangzylinder, dessen Zylinderräume mit 18' und 19' bezeichnet sind. Alle dem Antriebssystem in Fig. 1 entsprechenden Komponenten sind mit gleichen Bezugszeichen versehen. Um bei dem Ausführungsbeispiel nach Fig. 3 den erfindungsgemäßen geschlossenen Kreislauf für die Bewegungsvorgänge der Presse zu erzielen, ist es erforderlich, die Nebenzylinder 28 und 29 vom Pressenzylinder 16' zu trennen. Zum Ausführen des Eilgangs der Presse ist deshalb ein zweiter hydraulischer Transformator erforderlich, der ebenfalls aus einer ersten hydrostatischen Maschine 6' und einer zweiten hydrostatischen Maschine 7' besteht, die miteinander mechanisch gekuppelt sind und jeweils verstellbares Schluck- bzw. Fördervolumen besitzen. Die erste Maschine 6' ist wiederum an die Leitung 22, also an das Drucknetz mit eingeprägtem Druck angeschlossen, während die zweite Maschine 7' an die kolbenstangenseitigen Zylinderräume 30 und 31 der Nebenzylinder 28, 29 angeschlossen ist. Die anderen Anschlüsse der beiden Maschinen 6' und 7' sind mit dem Tank bzw. dem Niederdrucksystem 9 verbunden.

Somit ist es möglich, daß im Eilgang und beim Fressen der Pressenzylinder 16' wiederum im geschlossenen Kreislauf gefahren werden kann. Die Volumen der beiden Zylinderräume 18' und 19' sind gleich. Das Dekomprimieren und Spülen des in diesen geschlossenen Kreislauf befindlichen Arbeitsmittels erfolgt in der bereits anhand der Fig. 1 beschriebenen Weise. Gleiches gilt auch für das Einsteuern des Einspanndruckes über die Leitung 22 mit dem Rückschlagventil 23.

Der Eilgang abwärts sowie der Rückzug der Presse erfolgt aber über den zweiten hydraulischen Transformator 6', 7', wobei in dieser Phase die Zylinderräume 18', 19' einfach über das Kurzschlußventil 25 miteinander verbunden sind.

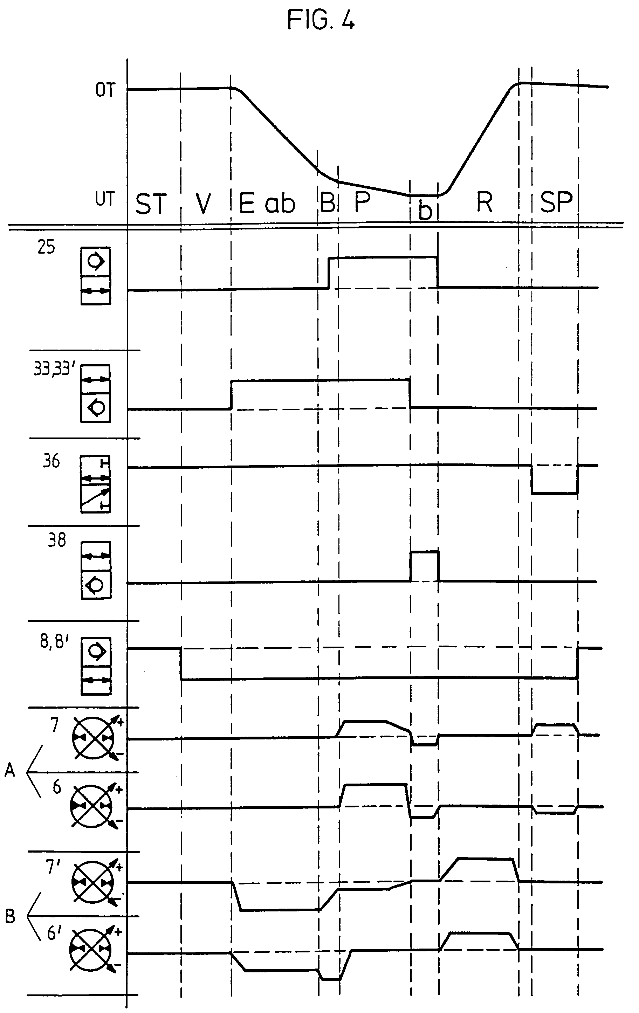

Die Schaltzustände der Ventile sowie die Einstellung der Maschinen der beiden hydraulischen Transformatoren sind in Fig. 4 dargestellt. Für den Betrieb des zweiten hydraulischen Transformators 6', 7' ist angenommen, daß die Presse so schwer ist, daß sie nach Freischalten der Ventile 33, 33' fällt und damit das aus den Zylinderräumen 30 und 31 verdrängte Arbeitsmittel die zweite Maschine 7' antreibt, die nunmehr als Motor arbeitend die Maschine 6' antreibt, so daß diese Energie in das Drucknetz zurückliefert, es muß also nur beim Rückzug der Presse die Maschine 7' angetrieben werden und fördert als Pumpe arbeitend Arbeitsmittel in die Zylinderräume 30 und 31.

## Patentansprüche

1. Hydraulisches Antriebssystem für eine Presse, bestehend aus einer angetriebenen hydrostatischen Maschine, die als Pumpe arbeitend einen eingeprägten Druck bzw. Konstantdruck in einem Drucknetz (3, 4) mit einem hydraulischen Speicher (4) aufrechterhält, ferner bestehend aus einem hydraulischen Transformator (6, 7) mit einer im Motor- oder Pumpenbetrieb arbeitenden ersten hydrostatischen Maschine (6) mit verstellbarem Schluck- bzw. Fördervolumen, die an das Drucknetz angeschlossen ist und mit einer ebenfalls im Motor- oder Pumpenbetrieb arbeitenden zweiten hydrostatischen Maschine (7) mit verstellbarem Schluck- bzw. Fördervolumen, die mit der ersten Maschine (6) mechanisch gekuppelt ist, und aus einem Pressenzylinder (16), dessen Zylinderräume (17, 18) an die beiden hydraulischen Anschlüsse der zweiten hydrostatischen Maschine (7) angeschlossen sind, dadurch gekennzeichnet, daß das Drucknetz (3, 4) mit beiden Zylinderräumen (17, 18) des Pressenzylinders (16) verbunden ist, um in beiden Zylinderräumen einen Vorspanndruck entsprechend dem Druck im Konstantdrucknetz einzusteuern.

2. Antriebssystem nach Anspruch 1, dadurch gekennzeichnet, daß der Anschluß des Drucknetzes an den Pressenzylinder über ein Rückschlagventil (23) erfolgt.

3. Antriebssystem nach Anspruch 1 oder 2, dadurch gekennzeichnet, daß die beiden Zylinderräume (17, 18) des Pressenzylinders (16) über ein Kurzschlußventil (25) miteinander verbindbar sind.

4. Antriebssystem nach Anspruch 3, dadurch gekennzeichnet, daß beim Auftreten eines Druckunterschiedes im Pressenzylinder das Kurzschlußventil automatisch sperrt.

5. Antriebssystem für einen Pressenzylinder mit Differentialkolben nach einem der Ansprüche 1 bis 4, dadurch gekennzeichnet, daß parallel zum Pressenzylinder (16) mindestens ein Nebenzylinder (28, 29) vorgesehen ist, wobei die Summe aller Ringflächen der Zylinder (16, 28, 29) etwa gleich oder etwas größer als die Kolbenfläche im Raum (17) des Pressenzylinders (16) ist, und im Eilgang die kolbenstangenseitigen Zylinderräume (30, 31) miteinander und beim Pressen die Räume (18, 30, 31) mit niederdruckseitigem Anschluß der zweiten hydrostatischen Maschine (7) verbunden sind.

6. Antriebssystem nach Anspruch 5, dadurch gekennzeichnet, daß die kolbenstangenseitigen Zylinderräume (30, 31) der Nebenzylinder (28, 29) ebenfalls mit dem Drucknetz (3, 4) verbunden sind, um in diesen Zylinderräumen einen Vorspanndruck entsprechend dem Druck im Konstantdrucknetz einzusteuern.

7. Antriebssystem nach Anspruch 6, dadurch gekennzeichnet, daß die kolbenstangenseitigen Zylinderräume der Nebenzylinder (28, 29) über ein Wege-Rückschlagventil (35) mit dem kolbenstangenseitigen Zylinderraum (18) des Pressenzylidners (16) verbunden sind.

8. Antriebssystem nach einem der Ansprüche 1 bis 7, dadurch gekennzeichnet, daß beim Dekomprimieren des Preßzylinders (16) die zweite Maschine (7) von dem aus dem kolbenseitigen Zylinderraum (17) des Preßzylinders verdrängten Arbeitsmittel angetrieben ist, und daß der Auslaß der zweiten Maschine mit dem kolbenstangenseitigen Zylinderraum (18) und den Nebenzylinderräumen (30, 31) in Verbindung steht.

9. Antriebssystem nach einem der Ansprüche 1 bis 8, dadurch gekennzeichnet, daß in der Verbindungsleitung (14 oder 15) zwischen der zweiten hydrostatischen Maschine (7) und dem Pressenzylinder (16) ein Umschaltventil (36) vorgesehen ist, das zum Spülen bei Stillstand der Presse Arbeitsmittel aus dem hydraulischen Kreislauf der Presse in den Tank (12) abführt, und das abgeführte Arbeitsmittel vom Drucknetz (3, 4) her ersetzt wird, und daß die zweite Maschine (7) von dem beim Spülen verdrängten Arbeitsmittel angetrieben ist.

10. Antriebssystem nach einem der Ansprüche 1 bis 9, dadurch gekennzeichnet, daß zwischen dem niederdruckseitigen Anschluß der zweiten hydrostatischen Maschine (7) und einem Niederdrucksystem (9) ein Ventil (38) vorgesehen ist, das zum Spülen bei laufender Presse in der Dekompressionsphase Arbeitsmittel aus dem kolbenseitigen Zylinderraum 17 des Pressenzylinders (16) niederdruckseitig abführt, das abgeführte Druckmittel vom Konstantdrucknetz (3, 4) her ersetzt wird, und die zweite Maschine (7) von dem verdrängten Arbeitsmittel angetrieben ist.

11. Antriebssystem nach einem der Ansprüche 1 bis 10, dadurch gekennzeichnet, daß die kolbenstangenseitigen Zylinderräume (18, 30 und 31) der Zylinder (16, 28, 29) über Umschaltventile (33, 33', 35) mit dem niederdruckseitigen Anschluß der zweiten Maschine (7) verbunden sind.

12. Antriebssystem für einen Pressenzylinder mit Gleichgangkolben nach einem der vorhergehenden Ansprüche, dadurch gekennzeichnet, daß parallel zum Pressenzylinder (16') mindestens ein Nebenzylinder (28, 29) vorgesehen ist, daß die beiden Zylinderräume (18', 19') miteinander und mit der zweiten hydrostatischen Maschine (7) verbunden sind, und daß ein zweiter hydraulischer Transformator vorgesehen ist, der aus einer ersten hydrostatischen Maschine (6') und einer zweiten hydrostatischen Maschine (7') besteht, beide Maschinen ein verstellbares Schluck- bzw. Fördervolumen haben und daß die erste Maschine an das Konstantdrucknetz (3) und die zweite Maschine (7') an die kolbenstangen-seitigen Zylinderräume (30, 31) der Nebenzylinder (28, 29) angeschlossen ist.

## Claims

1. A hydraulic drive system for a press, comprising a hydrostatic machine operating as a pump when being driven to maintain an impressed pressure of substantially constant magnitude in a fluid system including a hydraulic accumulator, further comprising a hydraulic transformer including a first hydrostatic machine of variable capacity and operating either as the motor or as a pump which first hydrostatic machine is connected to the fluid system, and a second hydrostatic machine of variable capacity and operating as a motor or as a pump which second hydrostatic machine is mechanically connected to said first machine, and a press cylinder including a pair of cylinder chambers which are hydraulically connected to both hydraulic ports of said second hydrostatic machine, characterized in that said fluid system (3,4) is hydraulically connected to both cylinder chambers (17,18) of the press cylinder (16) to subject both cylinder chambers to a biasing pressure corresponding to the pressure prevailing in said fluid system of substantially constant pressure.

2. The drive system of claim 1, characterized in that the connecting line between the fluid system and the press cylinder includes a check valve (23).

3. The drive system of claim 1 or 2, characterized in that both cylinder chambers (17,18) of the press cylinder (16) are hydraulically connected to each other through a short-circuit valve (25).

4. The drive system of claim 3, characterized in that the short-circuit valve automatically closes when a pressure difference occurs in the cylinder chambers of said press zylinder.

5. The drive system for a press cylinder including a differential piston according to any of claims 1 to 4, characterized in that at least a supplemental cylinder (28,29) acting parallel to said press cylinder (16), wherein the sum of all the annular piston areas of said cylinders (16,28,29) is substantially equal or somewhat higher than the piston area facing the cylinder space (17) of said press cylinder (16), and wherein the cylinder chambers (30,31) associated to the piston rods are connected to each other when the press performs a rapid traverse and wherein the cylinder chambers (18,30,31) are connected to the low pressure port of said second hydrostatic machine (7) in performing the pressing stroke.

6. The drive system of claim 5, characterized in that the piston rod sided cylinder chambers (30,31) of said supplemental cylinders (28,29) are also hydraulically connected to the fluid system (3,4) to subject the said cylinder chambers to a biasing pressure corresponding to the pressure in the fluid system of substantially constant pressure.

7. The drive system of claim 6, characterized in that the piston rod sided cylinder chambers of said supplemental cylinders (28,29) are connected through a combined directional and check valve (35) to the piston rod sided cylinder chamber (18) of said press cylinder (16).

8. The drive system according to any of claims 1 to 7, characterized in that said second hydraulic machine (7) is driven by the fluid volume displaced from the piston sided cylinder chamber (17) of said press cylinder (16) when said cylinder chamber is relieved from pressure and wherein the outlet port of said second hydraulic machine communicates with the piston rod sided cylinder chamber (18) and said cylinder chambers (30,31) of said supplemental cylinders.

9. The drive system according to any of claims 1 to 8, characterized by a directional control valve (36) which is provided in the hydraulic connecting line (14,15) between the second hydrostatic machine (7) and the press cylinder (16), said valve passing fluid from the hydraulic system of said press to a reservoir (12) for flushing said press and wherein the fluid drained is replaced front the fluid system (3,4) and wherein the second machine (7) is driven by the fluid displaced in flushing.

10. The drive system according to any of claims 1 to 9, characterized in that a valve (38) is provided between the low pressure port of said second hydrostatic machine (7) and a low pressure system (9) which valve drains fluid from the piston sided cylinder chamber (17) of the press cylinder (16) to the low pressure system for flushing the running press in the process of being pressure relieved, wherein the fluid drained is replaced from the fluid system (3,4) of constant pressure and wherein said second machine (7) is driven by the displaced fluid.

11. The drive system according to any of claims 1 to 10, characterized in that the piston rod sided cylinder chambers (18,30,31) of said cylinders (16,28, 29) are connected through control valves (33,33',35) to the low pressure port of said second hydraulic machine (7).

12. The drive system for a press cylinder with a synchronizing piston according to any of the preceding claims, characterized by at least a supplemental cylinder (28,29) acting parallel to said press cylinder (16'), wherein both cylinder chambers (18', 19') are connected to each other and to a second hydrostatic machine (7), and by a second hydraulic transformer being provided comprising a first hydrostatic machine (6') and a second hydrostatic machine (7'), both said machines having an adjustable flow rate and by said first machine being connected to the fluid system (3) of substantially constant pressure and said second machine (7') being connected to the piston rod sided cylinder chambers (30,31) of said supplemental cylinders (28,29).

## Revendications

1. Système d'entraînement hydraulique pour une presse, comportant une machine hydrostatique entraînée qui, fonctionnant comme une pompe, maintient une pression imposée ou une pression constante dans un réseau de pression (3, 4) avec un accumulateur hydraulique (4), et en outre un transformateur hydraulique (6, 7) avec une première machine hydrostatique (6) fonctionnant comme un moteur ou comme une pompe avec des volumes d'absorption ou des volumes déplacés réglables, qui est raccordée au réseau de pression et avec également une seconde machine hydrostatique (7) fonctionnant comme moteur ou comme pompe avec des volumes d'absorption ou des volumes déplacés réglables reliées mécaniquement à la première machine (6) et un vérin de presse (16) dont les chambres de cylindre (17, 18) sont reliées aux deux connexions hydrauliques de la seconde machine hydrostatique (7), caractérisé en ce que le réseau de pression (3, 4) est relié aux deux chambres (17, 18) du vérin de presse (16) afin d'appliquer une pression de précontrainte correspondant à la pression du réseau de pression constante dans les deux chambres du vérin.

2. Système d'entraînement selon la revendication 1, caractérisé en ce que la connexion du réseau de pression sur le vérin de presse est réalisée par l'intermédiaire d'un clapet anti-retour (23).

3. Système d'entraînement selon l'une quelconque des revendications 1 ou 2, caractérisé en ce que les deux chambres (17, 18) du vérin de presse (16) peuvent être reliées entre elles par l'intermédiaire d'une soupape de mise en court-circuit (25).

4. Système d'entraînement selon la revendication 3, caractérisé en ce que la soupape de mise en court-circuit ferme automatiquement en cas de différence de pression dans le vérin de presse.

5. Système d'entraînement pour un vérin de presse avec piston différentiel selon l'une quelconque des revendications 1 à 4, caractérisé en ce que, parallélement au vérin de presse (16), au moins un vérin secondaire (28, 29) est prévu, la somme de toutes les surfaces annulaires des vérins (16, 28, 29) étant environ identique ou un peu supérieure à la surface du piston dans la chambre (17) du vérin de presse (16) et en ce qu'en déplacement rapide, les chambres (30, 31) des vérins situées du côté de la tige du piston sont reliées ensemble et, lors de la descente de la presse, les chambres (18, 30, 31) sont reliées au raccord côté basse pression de la seconde machine hydrostatique (7).

6. Système d'entraînement selon la revendication 5, caractérisé en ce que les chambres (30, 31) des vérins secondaires (28, 29) situées du côté de la tige du piston sont également reliées aux réseaux de pression (3, 4) afin d'appliquer dans ces chambres de vérin une pression de précontrainte identique à la pression du réseau de pression constante.

7. Système d'entraînement selon la revendication 6, caractérisé en ce que les chambres des vérins secondaires (28, 29) situées du côté de la tige du piston sont reliées à la chambre (18) du vérin de presse (16) située du côté de la tige du piston par un distributeur anti-retour (35).

8. Système d'entraînement selon l'une quelconque des revendications 1 à 7, caractérisé en ce que lors de la décompression du vérin de presse (16), la seconde machine (7) est entraînée par le fluide actif chassé de la chambre (17) du vérin de presse située du côté de la tige du piston et en ce que la sortie de la seconde machine est en communication avec la chambre (18) située du côté de la tige du piston et avec les chambres des vérins secondaires (30, 31).

9. Système d'entraînement selon l'une quelconque des revendications 1 à 8, caractérisé en ce que dans le circuit de communication (14 ou 15) entre la seconde machine hydrostatique (7) et le vérin de presse (16), une soupape d'inversion (36) est prévue qui, pour rincer, en position d'arrêt de la presse, évacue le fluide actif hors du circuit hydraulique de la presse dans la bâche (12), en ce que le fluide actif évacué est remplacé à partir du réseau de pression (3, 4) et en ce que la seconde machine (7) est entraînée par le fluide actif refoulé lors du rinçage.

10. Système d'entraînement selon l'une quelconque des revendications 1 à 9, caractérisé en ce qu'entre le raccord côté basse pression de la seconde machine hydrostatique (7) et un système de basse pression (9), une soupape (38) est prévue, qui, pour le rinçage lorsque la presse fonctionne, dans la phase de décompression, évacue côté basse pression du fluide actif hors de la chambre 17 du vérin de presse (16) située du côté du piston, et en ce que le fluide de pression évacué est remplacé à partir du réseau de pression constante (3, 4), la seconde machine (7) étant entraînée par le fluide actif refoulé.

11. Système d'entraînement selon l'une quelconque des revendications 1 à 10, caractérisé en ce que les chambres (18, 30 et 31) des vérins (16, 28, 29) situées du côté de leur tige de piston sont reliées au raccord côté basse pression de la seconde machine (7) par l'intermédiaire de soupapes d'inversion (33, 33', 35).

12. Système d'entraînement pour un vérin de presse avec des pistons synchrones selon l'une quelconque des revendications précédentes, caractérise en ce que, parallèlement au vérin de presse (16'), au moins un vérin secondaire (28, 29) est prévu, en ce que les deux chambres de vérin (18', 19') sont reliées entre elles et à la seconde machine hydrostatique (7), et en ce qu'un second transformateur hydraulique est prévu qui est composé d'une première machine hydrostatique (6') et d'une seconde machine hydrostatique (7'), les deux machines ayant des volumes d'absorption et des volumes déplacés réglables et la première machine étant connectée au réseau de pression constante (3) et la seconde machine aux chambres (30, 31) des vérins secondaires (28, 29) situées du côté de la tige de piston.
